# EUROPEAN PATENT APPLICATION

(11) **EP 2 908 599 A1**
(43) Date of publication of application: **19.08.2015**
(21) Application number: 14182470.6
(22) Date of filing: 27.08.2014
(51) Int. Cl.: H04W 88/06

(54) **Wireless communication apparatus and wireless communication method**

(30) Priority: 18.02.2014 JP 2014028459
(71) Applicant: Kabushiki Kaisha Toshiba, Tokyo 105-8001 (JP)
(72) Inventor: Tsunoda, Keiji, Tokyo, 105-8001 (JP)
(74) Representative: Hoffmann Eitle

(57) **Abstract**

According to an embodiment, a wireless communication apparatus includes a plurality of wireless devices configured to perform wireless communication using an identical frequency band. Each of the wireless devices includes a transmitting circuit, a receiving circuit, and a coexistence arbitrating circuit. The transmitting circuit is configured to transmit a wireless signal. The receiving circuit is configured to receive the wireless signal. The coexistence arbitrating circuits of the wireless devices arbitrate each other to determine the wireless device to which wireless communication priority is given. While a priority wireless device is in a transmission state or in a reception state, in each of the wireless devices that is in the transmission state other than the priority wireless device, the coexistence arbitrating circuit suspends operation of at least part of the transmitting circuit, or lowers an amplification factor of at least part of the transmitting circuit.

## Description

### FIELD

Embodiments described herein relate generally to a wireless communication apparatus and a wireless communication method.

### BACKGROUND

There is a wireless communication apparatus having a plurality of wireless devices that perform wireless communication by communication standards different from each other using an identical frequency band. In order to prevent interference between the wireless devices, this wireless communication apparatus arbitrates between the wireless devices, determines a wireless device to which wireless communication priority is given, thereby allowing the plurality of wireless devices to coexist. Unless all the wireless devices are in a reception state, however, communication performance of the priority wireless device degrades.

### BRIEF DESCRIPTION OF THE DRAWINGS

Fig. 1 is a block diagram illustrating a schematic configuration of a wireless communication apparatus according to an embodiment.
Fig. 2 is a block diagram illustrating a schematic configuration of a wireless communication apparatus of a comparative example.
Fig. 3 is a timing chart illustrating each of the signals in the wireless communication apparatus of Fig. 2.
Fig. 4 is a block diagram illustrating signal lines between coexistence arbitrating circuits of the wireless communication apparatus of Fig. 1.
Fig. 5 is a timing chart illustrating each of the signals in the wireless communication apparatus of Fig. 4.
Fig. 6 is a timing chart illustrating each of the signals when priority is given to a BT device.
Fig. 7 is a timing chart illustrating each of the signals when priority is given to a wireless LAN device.
Fig. 8 is a block diagram illustrating the configuration related to wireless communication of the BT device of Fig. 1 in more detail.
Fig. 9 is a diagram illustrating a method of controlling the circuits of Fig. 8 in the BT device.
Fig. 10 is a diagram illustrating a method of controlling the circuits of Fig. 8 in the wireless LAN device.
Fig. 11 is a diagram illustrating a method of individually controlling suspension of each of the circuits in a non-priority wireless device.
Fig. 12 is a diagram illustrating a method of lowering the amplification factor of each of the circuits in a non-priority wireless device.

### DETAILED DESCRIPTION

According to an embodiment, a wireless communication apparatus includes a plurality of wireless devices configured to perform wireless communication using an identical frequency band. Each of the wireless devices includes a transmitting circuit, a receiving circuit, and a coexistence arbitrating circuit. The transmitting circuit is configured to transmit a wireless signal. The receiving circuit is configured to receive the wireless signal. The coexistence arbitrating circuits of the wireless devices arbitrate each other to determine the wireless device to which wireless communication priority is given. While a priority wireless device is in a transmission state or in a reception state, in each of the wireless devices that is in the transmission state other than the priority wireless device, the coexistence arbitrating circuit suspends operation of at least part of the transmitting circuit, or lowers an amplification factor of at least part of the transmitting circuit.

Before description of an embodiment of the present invention, the background in which the present invention has been achieved by the inventor will be described.

The radio law of each country specifies that a predetermined wireless frequency is used in a wireless communication system. Particularly, mobile communication, satellite communication, broadcasting, a radar, etc. with high public responsibility are assigned with a wireless frequency dedicated for the system. In contrast, a plurality of systems share an identical frequency in some cases. For example, in a wireless system using a frequency band called an industry, science, and medical (ISM) band, a plurality of wireless systems or various apparatuses other than wireless systems need to share an identical frequency band. In each of the wireless systems, communication is performed under constraints. However, few wireless systems provide an idea of sharing a frequency band as a system while avoiding each other between different wireless systems. As a result, a situation may occur in which, while an apparatus of a certain wireless system is transmitting or receiving a radio wave, an apparatus of another wireless system is transmitting or receiving a radio wave at a frequency identical to a frequency of the above-described radio wave.

It is difficult to avoid such interference between wireless systems as an entire system. However, some wireless communication apparatuses having a plurality of wireless devices (wireless interfaces) prevent interference between the plurality of wireless devices. A function of arbitrating between the plurality of wireless devices in one wireless communication apparatus is referred to as a coexistence function. In the coexistence function, for example, in a case where first and second wireless devices exist, when the first wireless device wants to communicate, the first wireless device sends a request to the second wireless device that the first wireless device wants to communicate. Then, in response to the request, the second wireless device examines whether the second wireless device also wants to communicate, and notifies the first wireless device of an approval or disapproval. When approved, the first wireless device can communicate after that. When disapproved, the second wireless device can communicate after that.

As an example of the wireless communication apparatus having the coexistence function, a configuration is known in which a signal is exchanged using up to four signal lines between the first wireless device and the second wireless device. This wireless communication apparatus makes a wireless local area network (LAN) and Bluetooth (registered trademark) (hereinafter also referred to as BT) that use 2.4 GHz coexist.

This wireless communication apparatus is configured such that interactions takes place for determining communication priority using three among four signal lines, and a wireless device to which priority is given resulting from the determination can make communication.

Information regarding a frequency to be used is shared by the first wireless device and the second wireless device by information on a remaining signal line, or by information that a host who includes the first wireless device and the second wireless device has. When it turns out that neither of them uses an identical frequency, simultaneous communication will be allowed.

In practice, however, in a wireless communication apparatus in which the first wireless device and the second wireless device are disposed in close proximity, a situation can occur in which one wireless device cannot communicate while the other wireless device is transmitting although an identical frequency is not used.

Generally in a wireless system, communication performance with respect to a disturbing wave (hereinafter referred to as disturbing wave property) is specified as system performance. While a wireless communication apparatus is communicating using a certain wireless system, other radio waves that have no connection with communication of the wireless communication apparatus are referred to as disturbing waves. The disturbing waves are classified into a disturbing wave with a frequency identical to a frequency at which communication is taking place, and a disturbing wave with a frequency near the frequency at which communication is taking place. An allowable level of each of the disturbing waves is specified as a disturbing wave property for each wireless system. According to a regulation, when a disturbing wave equal to or greater than the allowable level exists, it is unavoidable that wireless communication performance degrades.

Therefore, in a case where the second wireless device is in close proximity to the first wireless device, when the second wireless device transmits, a transmission signal of the second device is considered to be a nearby disturbing wave for the first device even if an identical frequency is not used. Accordingly, the coexistence function will not work properly only by using different frequencies.

Generally, the first wireless device has a function of amplifying a reception signal at a time of reception. Herein, consider a case where the second wireless device transmits and the first wireless device receives. At this time, the first wireless device receives a transmission signal of the second wireless device while amplifying the signal. This causes the amplified reception signal of the first wireless device to be interference noise for the transmission signal of the second wireless device. As a result, the transmission signal of the second wireless device is also distorted. Particularly when the first wireless device and the second wireless device are integrated into an identical large scale integrated circuit (LSI), such interference becomes more conspicuous.

In view of the foregoing, when the coexistence function is activated, it is necessary to examine the wireless communication apparatus having a plurality of wireless devices by dividing the state of apparatus into the following three cases depending on three types of states including a transmission state, a reception state, and a standby state of each of the wireless devices. The transmission state is a state where the wireless device is transmitting. The reception state is a state where the wireless device is receiving, or waiting for a wireless signal so that the wireless device can receive at any time. The standby state is a state where the wireless device is performing neither transmission nor reception. The following describes an example where the wireless communication apparatus includes two wireless devices.
(A) When the first wireless device is in the transmission state and the second wireless device is in the transmission state, the first wireless device and the second wireless device interfere with each other even if frequencies differ, thus it is necessary to make an adjustment so that only either one of the wireless devices can transmit.
(B) When one of the wireless devices is in the transmission state and the other wireless device is in the reception state, a radio wave of the wireless device in the transmission state adversely affects a reception signal of the wireless device that is in the reception state. Moreover, the adversely affected reception signal of the wireless device in the reception state conversely affects the wireless device in the transmission state adversely. Accordingly, it is also necessary to make an adjustment for reducing this interference.
(C) When the first and second wireless devices are in the reception state, each of the wireless devices can receive a signal unless a party wireless device is in close vicinity. When at least one of the wireless devices is in the standby state, there is no problem even if the other device is in any state.

Therefore, in the cases of (A) and (B) except (C), the adjustment is needed between the wireless devices. Among these cases, considering only causing one of the wireless devices to transmit, it is possible to achieve (A) by the above-described four-signal-line configuration. That is, it is possible to cause either one of the devices to transmit by ignoring a signal line for frequency information and determining a priority wireless device using three remaining signal lines. However, there is no regulation about, when one of the wireless devices transmits, in what state a circuit of the other wireless device is to be kept. For example, there is a possibility that part of a transmitting circuit of the other wireless device is operating. Accordingly, there is a possibility that, when the first wireless device is in the transmission state, an operating state of a circuit of the second wireless device affects transmission performance of the first wireless device. In the case of (B), there is a possibility that operation of a wireless device in the reception state affects operation of a wireless device in the transmission state, as described above.

As described above, the present inventor has independently acquired that there is a problem that, in a wireless communication apparatus having a plurality of wireless devices that use an identical frequency band, even if the coexistence function is activated, a signal of a non-priority wireless device serves as noise in a circuit, which degrades communication performance of a priority wireless device unless all wireless devices are in the reception state. It is not possible to solve this problem only by the simple coexistence function that uses four signal lines.

The inventor has made the present invention based on the above-described independent knowledge.

The following describes an embodiment of the present invention with reference to the drawings. This embodiment does not limit the present invention.

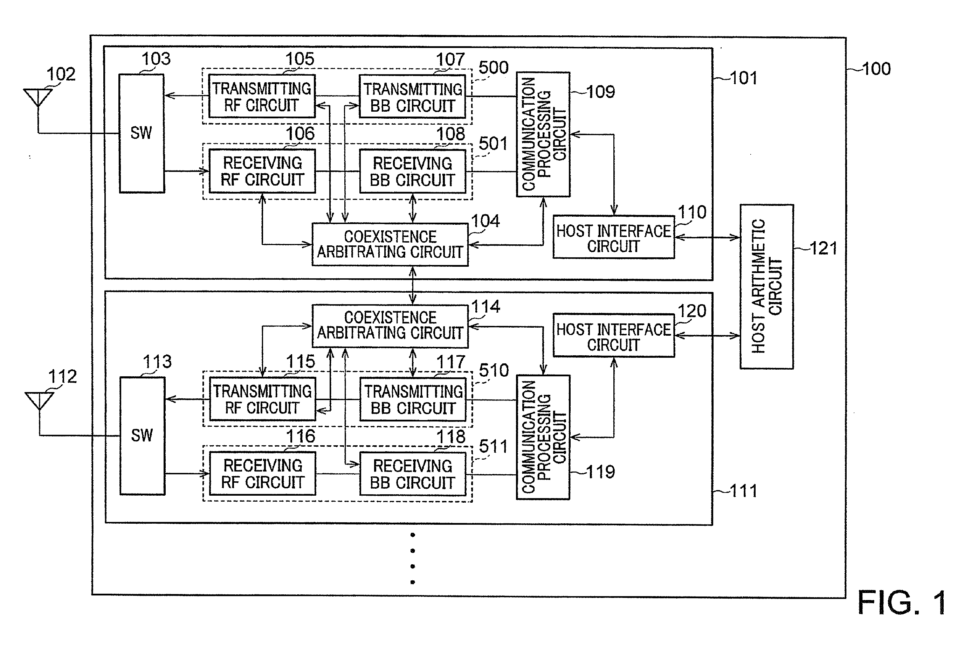

Fig. 1 is a block diagram illustrating a schematic configuration of a wireless communication apparatus 100 according to an embodiment. The wireless communication apparatus 100 includes a host arithmetic circuit 121 that oversees the entire operation and a plurality of wireless devices. Fig. 1 illustrates a first wireless device 101 and a second wireless device 111 among the plurality of wireless devices. The following describes an example that includes the first and second wireless devices 101 and 111.

The first wireless device 101 and the second wireless device 111 perform wireless communication by communication standards different from each other using an identical frequency band. The present embodiment describes an example in which the first wireless device 101 is a wireless device compliant with a Bluetooth and the second wireless device 111 is a wireless device compliant with a wireless LAN. That is, the first and second wireless devices 101 and 111 both use a frequency band of 2.4 GHz. In addition, each of the first and second wireless devices 101 and 111 performs transmission and reception in a time division manner. Hereinafter, the first wireless device 101 is referred to as a BT device 101, and the second wireless device 111 is referred to as a wireless LAN device 111.

The BT device 101 includes an antenna 102, an antenna switch 103, a coexistence arbitrating circuit 104, a transmitting radio frequency (RF) circuit 105, a receiving RF circuit 106, a transmitting baseband circuit 107, a receiving baseband circuit 108, a communication processing circuit 109, and a host interface circuit 110. The transmitting RF circuit 105 and the transmitting baseband circuit 107 function as a transmitting circuit 500 for transmitting a wireless signal. The receiving RF circuit 106 and the receiving baseband circuit 108 function as a receiving circuit 501 for receiving a wireless signal.

The wireless LAN device 111 also has a configuration almost identical to a configuration of the BT device 101. That is, the wireless LAN device 111 includes an antenna 112, an antenna switch 113, a coexistence arbitrating circuit 114, a transmitting RF circuit 115, a receiving RF circuit 116, a transmitting baseband circuit 117, a receiving baseband circuit 118, a communication processing circuit 119, and a host interface circuit 120. The transmitting RF circuit 115 and the transmitting baseband circuit 117 function as a transmitting circuit 510 for transmitting a wireless signal. The receiving RF circuit 116 and the receiving baseband circuit 118 function as a receiving circuit 511 for receiving the wireless signal.

In Fig. 1, the antennas 102 and 112 are provided individually for the BT device 101 and the wireless LAN device 111, respectively, but it is also possible to integrate these antennas into one antenna.

Each of the BT device 101 and the wireless LAN device 111 has three states including a transmission state, a reception state, and a standby state. A transition between respective states is performed depending on control by the host arithmetic circuit 121 with timing for each of the BT device 101 and the wireless LAN device 111 independently.

Operation of the BT device 101 in each state will be described. As described above, the transmission state refers to a state in which the BT device 101 is transmitting. In the transmission state, the BT device 101 receives, from the host arithmetic circuit 121 via the host interface circuit 110, a signal data to be transmitted. The communication processing circuit 109 performs signal processing on the received signal data and generates a series of signals called a frame or a packet. The transmitting baseband circuit 107 modulates these signals. The transmitting RF circuit 105 generates a high-frequency wireless signal by performing modulation for wireless transmission on modulation signals generated in the transmitting baseband circuit 107. The transmitting RF circuit 105 transmits this wireless signal via the antenna switch 103 and the antenna 102.

The reception state includes a waiting state for reception in addition to a state in which the BT device 101 is actually receiving a wireless signal. In the state of receiving the wireless signal, the BT device 101 receives the wireless signal that is received by the antenna 102. The antenna switch 103 supplies this wireless signal to the receiving RF circuit 106. The receiving RF circuit 106 performs amplification, frequency conversion, etc. on the wireless signal. The receiving baseband circuit 108 converts an output signal of the receiving RF circuit 106 back to a baseband signal, and demodulates the signal. The communication processing circuit 109 extracts information from a signal that is demodulated in the receiving baseband circuit 108. This information is passed to the host arithmetic circuit 121 via the host interface circuit 110. In the waiting state, the receiving RF circuit 106 and the receiving baseband circuit 108 continue monitoring the wireless signal from the antenna 102.

In the standby state, at least the transmitting RF circuit 105, the receiving RF circuit 106, the transmitting baseband circuit 107, and the receiving baseband circuit 108 have suspended operation. In the standby state, transmission and reception of the wireless signal are not performed.

Operation of the wireless LAN device 111 in each state is similar to operation of the BT device 101, thus description will be omitted.

Thus, each of the plurality of wireless devices makes a transition independently between the three states. In order to arbitrate a plurality of wireless devices that transmit and receive a wireless signal of an identical frequency band, therefore, the coexistence arbitrating circuits 104 and 114 are needed. That is, the coexistence arbitrating circuits 104 and 114 of the BT device 101 and the wireless LAN device 111 arbitrate each other to determine a wireless device to which wireless communication priority is given.

The following describes in more detail a wireless communication apparatus 200 of a comparative example that has the above-described four signal lines. Subsequently, the following describes operation of the coexistence arbitrating circuits 104 and 114 of the present embodiment as contrasted with this comparative example.

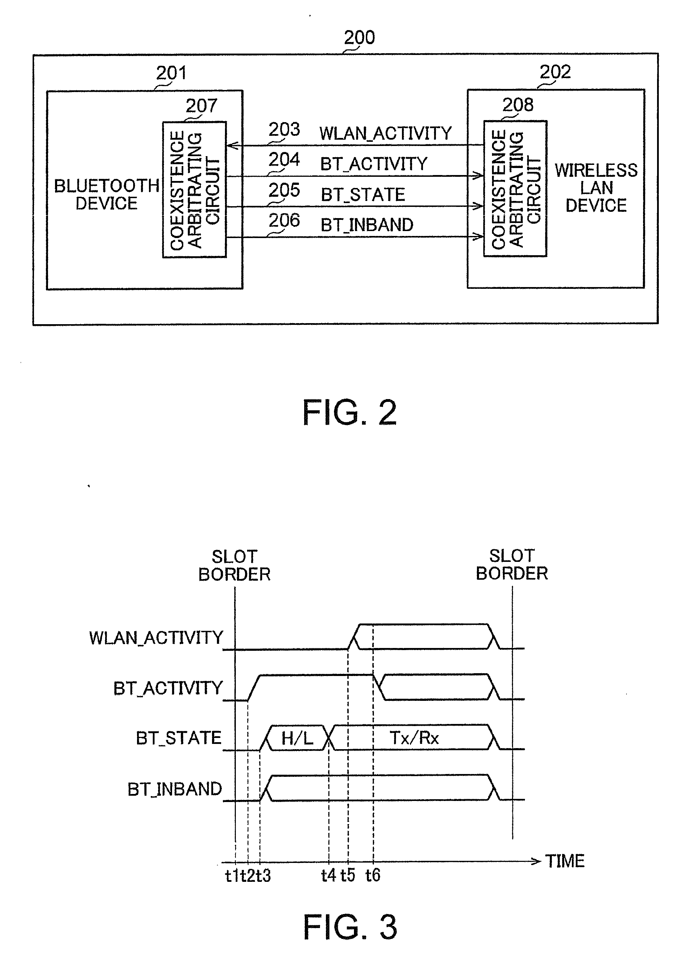

Fig. 2 is a block diagram illustrating a schematic configuration of the wireless communication apparatus 200 of the comparative example. The wireless communication apparatus 200 includes a BT device 201 that is a wireless device and a wireless LAN device 202 that is wireless device. Signals are exchanged using up to four signal lines 203 to 206 between these two wireless devices. Specifically, these signals are exchanged between coexistence arbitrating circuits 207 and 208.

The signal line 204 transmits, to the wireless LAN device 202, a Bluetooth activity signal BT_ACTIVITY that indicates a communication request that the BT device 201 wants to start communication now. The Bluetooth activity signal BT_ACTIVITY is H (high) level when there is a communication request, and is L (low) level when there is no communication request.

The signal line 205 transmits a Bluetooth state signal BT_STATE that includes two types of signals distinguished by time from the BT device 201 to the wireless LAN device 202. The two types of signals refer to a signal representing a degree of priority of a signal that the BT device 201 wants to communicate, and a signal indicating that this communication is either transmission or reception. Herein, the Bluetooth state signal BT_STATE is H level when the priority of the signal to communicate is high, and the Bluetooth state signal BT_STATE is L level when the priority of the signal to communicate is low. In addition, the Bluetooth state signal BT_STATE is H level when the BT device 201 wants to transmit, and the Bluetooth state signal BT_STATE is L level when the BT device 201 wants to receive.

The signal line 206 transmits a Bluetooth inband signal BT_INBAND from the BT device 201 to the wireless LAN device 202. The Bluetooth inband signal BT_INBAND indicates whether a frequency used by the BT device 201 for communication overlaps a frequency used by the wireless LAN device 202. Herein, the Bluetooth inband signal BT_INBAND is H level when the frequencies overlap each other. The Bluetooth inband signal BT_INBAND is L level when the frequencies do not overlap each other.

In response to the communication request from the BT device 201, the signal line 203 returns a wireless LAN activity signal WLAN_ACTIVITY from the wireless LAN device 202 to the BT device 201. The wireless LAN activity signal WLAN_ACTIVITY indicates whether priority is given to the wireless LAN device 202 or to the BT device 201. The wireless LAN activity signal WLAN_ACTIVITY is H level when priority is given to the wireless LAN device 202. The wireless LAN activity signal WLAN_ACTIVITY is L level when priority is given to the BT device 201. In this way, the wireless communication apparatus 200 is configured such that, when the wireless LAN device 202 and the BT device 201 are included, the coexistence arbitrating circuit 208 on a side of the wireless LAN device 202 makes a final determination about to which device priority is given.

Fig. 3 is a timing chart illustrating each of the signals in the wireless communication apparatus 200 of Fig. 2. A change in each of the signals from the BT device 201 starts from a border of a slot that serves as a unit of communication of the BT device 201. The slot is synchronized every 625 µs between the BT device 201 of the wireless communication apparatus 200 and a BT device (not illustrated) outside of the wireless communication apparatus 200. In a case where the BT device 201 wants to communicate when predetermined time has elapsed from a slot border (time t1), the Bluetooth activity signal BT_ACTIVITY is set to H level (time t2).

Subsequently, the Bluetooth inband signal BT_INBAND is changed (time t3). When a frequency of the BT is within a range of a communication band of the wireless LAN, the Bluetooth inband signal BT_INBAND is set to H level. In addition, the Bluetooth state signal BT_STATE is changed almost simultaneously (time t3), and subsequently is changed again (time t4). At first, the Bluetooth state signal BT_STATE indicates a signal about whether priority of the BT signal that the device wants to communicate is high or low (time t3 to t4). Subsequently, the Bluetooth state signal BT_STATE indicates a transmission/reception identification signal BT_TXRX about whether the slot is a transmission slot or a reception slot (after time t4).

When receiving these signals from the BT device 201, the wireless LAN device 202 indicates to which device priority is given by the wireless LAN activity signal WLAN_ACTIVITY (time t5).

For example, when the Bluetooth state signal BT_STATE indicates that the degree of priority of the BT device 201 is high, the wireless LAN activity signal WLAN_ACTIVITY is set to L level. When the Bluetooth state signal BT_STATE indicates that the degree of priority of the BT device 201 is low, the wireless LAN activity signal WLAN_ACTIVITY is set to H level.

When the wireless LAN activity signal WLAN_ACTIVITY is set to H level by the time (time t6) when a certain time elapses from the BT slot border (time t1), priority is given to the wireless LAN device 202. Conversely, when the wireless LAN activity signal WLAN_ACTIVITY remains to be L level, priority is given to the BT device 201. A wireless device to which priority is given can perform wireless communication after time t6.

After time t6, a non-priority wireless device also performs wireless communication in predetermined cases such as when frequencies do not overlap each other or when receiving. That is, a non-priority wireless device can also be in the transmission state or the reception state.

Fig. 3 illustrates an example in which one communication ends within one BT slot. Actual communication however may be performed using a plurality of slots consecutively.

A problem of this comparative example is as already described. When priority is given to one of the wireless devices and the other wireless device is in the transmission state or in the reception state, interference occurs between the wireless devices, leading to performance degradation. In more detail, inconvenience occurs particularly in the following six cases. These are problems even when frequencies do not agree and a nearby frequency is used. This is because, when another wireless device uses the nearby frequency, a disturbing wave property of an adjacent channel and next adjacent channel is specified by communication standards of wireless LAN and BT. When a plurality of wireless devices are at nearby places such as in the common wireless communication apparatus 200 as in the comparative example or within a common LSI, influence of other wireless devices is very large.
(1) When priority is given to transmission by the wireless LAN device 202 and the BT device 201 is also set in the transmission state, operation of circuits in the BT device 201 adversely affects a transmission signal of the wireless LAN device 202.
(2) When priority is given to transmission by the wireless LAN device 202 and the BT device 201 is set in the reception state, operation of circuits in the BT device 201 adversely affects the transmission signal of the wireless LAN device 202.
(3) When priority is given to reception by the wireless LAN device 202 and the BT device 201 is set in the transmission state, operation of circuits in the BT device 201 adversely affects a reception signal of the wireless LAN device 202.
(4) When priority is given to transmission by the BT device 201 and the wireless LAN device 202 is also set in the transmission state, operation of circuits in the wireless LAN device 202 adversely affects a transmission signal of the BT device 201.
(5) When priority is given to transmission by the BT device 201 and the wireless LAN device 202 is set in the reception state, operation of circuits in the wireless LAN device 202 adversely affects the transmission signal of the BT device 201.
(6) When priority is given to reception by the BT device 201 and the wireless LAN device 202 is set in the transmission state, operation of circuits in the wireless LAN device 202 adversely affects a reception signal of the BT device 201.

The following describes possible countermeasures against the above six cases.

First, in a system of the comparative example, the BT device 201 fails to know whether the wireless LAN device 202 is in the transmission state or in the reception state. Accordingly, the BT device 201 fails to understand how operation of the BT device 201 influences on the wireless LAN device 202. Therefore, a signal is added, in the present embodiment, to indicate whether the wireless LAN device 111 is in the transmission state or in the reception state.

Next, when communication performance is degraded in the above-described six cases, it is preferable to take measures so that a non-priority wireless device does not interfere with a priority wireless device. Specifically, in the present embodiment, when the priority wireless device actually transmits and receives, the other non-priority wireless device is arranged to be temporarily suspended or to temporarily operate with a sufficiently small amplification factor (gain). This makes it possible to reduce noise generated from the other non-priority wireless device towards the priority wireless device, and to keep communication quality of the priority wireless device.

However, when a wireless device is in one of the three states, that is, the transmission state, the reception state, and the standby state, while the wireless device is in the transmission state or in the reception state, a time period of actual transmission or reception of a wireless signal is short in many cases. Accordingly, when the wireless devices can exchange a signal that indicates a time period of actually receiving a wireless signal or a time period of transmitting a wireless signal as an additional signal between the wireless devices, it is possible to reduce a time period during which operation must be actually adjusted between the plurality of wireless devices. As a result, flexibility of operation of each of the wireless devices increases, thus communication efficiency is favorably enhanced.

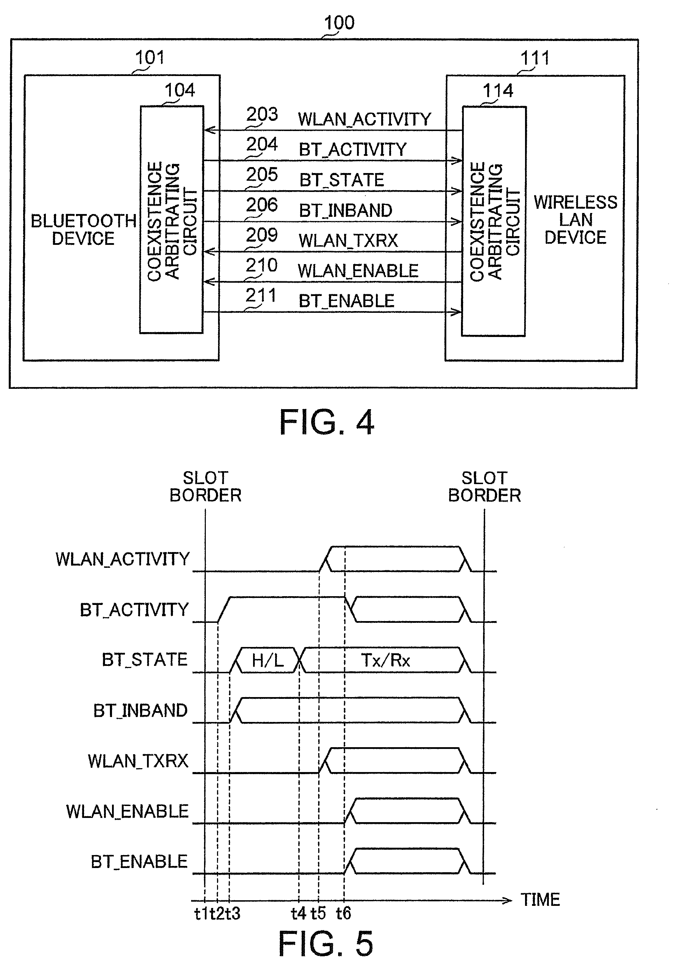

Fig. 4 illustrates a configuration of the wireless communication apparatus 100 according to the present embodiment in which signal lines are added to the comparative example in consideration of the above matters.

Fig. 4 is a block diagram illustrating signal lines 203 to 211 between the coexistence arbitrating circuits 104 and 114 of the wireless communication apparatus 100 of Fig. 1. In Fig. 4, three signal lines 209 to 211 are added to the comparative example of Fig. 2. The signal lines 203 to 206 and the signals transmitted through these signal lines are identical to those in Figs 2 and 3, thus description will be omitted. In Fig. 4, components other than the signal lines 203 to 211 between the coexistence arbitrating circuits 104 and 114 are identical to components of Fig. 1, thus description will be omitted.

The signal line 209 transmits, from the wireless LAN device 111 to the BT device 101, a wireless LAN transmission/reception identification signal WLAN_TXRX that indicates whether the wireless LAN device 111 is scheduled to perform transmission or reception.

The signal line 210 transmits, from the wireless LAN device 111 to the BT device 101, a wireless LAN enable signal WLAN_ENABLE that indicates that the wireless LAN device 111 is in the transmission state or in the reception state.

The signal line 211 transmits, from the BT device 101 to the wireless LAN device 111, a Bluetooth enable signal BT_ENABLE that indicates that the BT device 101 is in the transmission state or in the reception state.

In Fig. 4, seven signal lines 203 to 211 are used. However, it is also possible to reduce the number of signal lines by exchanging a plurality of signals through one signal line.

Fig. 5 is a timing chart illustrating each of the signals in the wireless communication apparatus 100 of Fig. 4. A change in each of the signals from the BT device 101 starts from a border of a slot that serves as a unit of communication of the BT device 101. In a case where the BT device 101 wants to communicate when a predetermined time has elapsed from a slot border (time t1), the coexistence arbitrating circuit 104 of the BT device 101 sets the Bluetooth activity signal BT_ACTIVITY to H level (time t2).

Subsequently, the coexistence arbitrating circuit 104 changes the Bluetooth inband signal BT_INBAND (time t3). When a frequency used by the BT device 201 for communication is within a range of a communication band of the wireless LAN, the signal is set to H level. The host arithmetic circuit 121 understands whether the frequency is within the range of the communication band of the wireless LAN. The coexistence arbitrating circuit 104 changes the Bluetooth state signal BT_STATE almost simultaneously (time t3), and subsequently changes the signal again (time t4). At first, the Bluetooth state signal BT_STATE indicates a signal about whether the degree of priority of the BT signal that the device wants to communicate is high or low (time t3 to t4). Subsequently, the Bluetooth state signal BT_STATE indicates the transmission/reception identification signal BT_TXRX about whether the slot is a transmission slot or a reception slot (after time t4).

When receiving these signals from the BT device 101, the coexistence arbitrating circuit 114 of the wireless LAN device 111 indicates to which device priority is given by the wireless LAN activity signal WLAN_ACTIVITY (time t5). In addition, the coexistence arbitrating circuit 114 changes the wireless LAN transmission/reception identification signal WLAN_TXRX at a timing (time t5) when the wireless LAN activity signal WLAN_ACTIVITY is changed. This signal is H level at a time of transmission. This signal is L level at a time of reception.

When the wireless LAN activity signal WLAN_ACTIVITY is set to H level by the time (time t6) when a certain time elapses from the BT slot border (time t1), priority is given to the wireless LAN device 111. Conversely, when the wireless LAN activity signal WLAN_ACTIVITY remains to be L level, priority is given to the BT device 101. A wireless device to which priority is given can communicate after time t6. Fig. 5 illustrates an example in which one communication ends within one BT slot. Actual communication however may be performed using a plurality of slots consecutively.

When the wireless LAN device 111 has priority, the coexistence arbitrating circuit 114 sets the wireless LAN enable signal WLAN_ENABLE to H level while the wireless LAN device 111 is actually transmitting or receiving a wireless signal. Similarly, when the BT device 101 has priority, the coexistence arbitrating circuit 104 sets the Bluetooth enable signal BT_ENABLE to H level while the BT device 101 is actually transmitting or receiving a wireless signal.

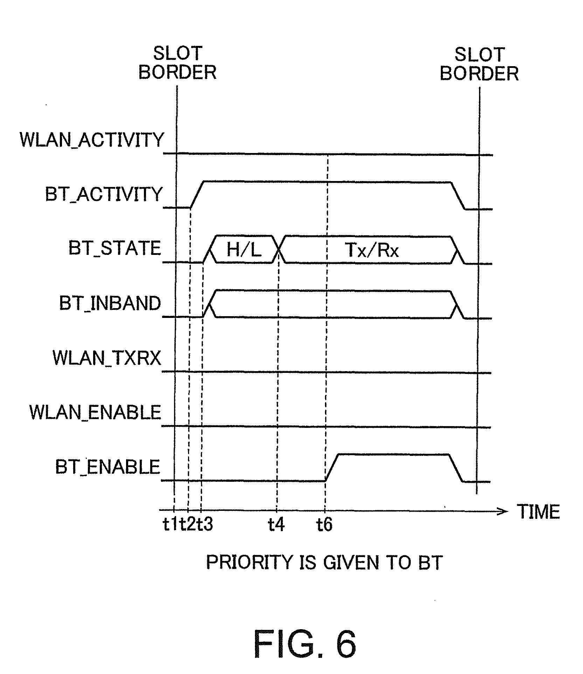

The following describes a more specific example of Fig. 5. Fig. 6 is a timing chart illustrating each of the signals when priority is given to the BT device 101. After the BT slot border (time t1), the Bluetooth activity signal BT_ACTIVITY is first set to H level (time t2).

Subsequently, the Bluetooth inband signal BT_INBAND and the Bluetooth state signal BT_STATE are changed (time t3 and t4) to give information from the BT device 101 to the wireless LAN device 111.

When determining from those pieces of information that the BT device 101 has priority, the wireless LAN device 111 keeps the wireless LAN activity signal WLAN_ACTIVITY fixed on L level. At this time, the wireless LAN device 111 also keeps the wireless LAN transmission/reception identification signal WLAN_TXRX fixed on L level in this example. In addition, the wireless LAN device 111 also keeps the wireless LAN enable signal WLAN_ENABLE fixed on L level.

The BT device 101 checks a level of the wireless LAN activity signal WLAN_ACTIVITY at time t6 counted from the BT slot border (time t1). When the wireless LAN activity signal WLAN_ACTIVITY turns out to be L level, the BT device 101 understands that the BT device 101 has priority and starts communicating operation. The BT device 101 sets the Bluetooth enable signal BT_ENABLE to H level at a timing (time t6) of actually transmitting or receiving a signal.

The Bluetooth enable signal BT_ENABLE is set to H level only while the BT device 101 is actually receiving or transmitting a wireless signal. A time period during which the BT device 101 actually receives or transmits a wireless signal is shorter than a time period during which the Bluetooth activity signal BT_ACTIVITY is H level. In addition, the BT device 101 may not transmit or receive a wireless signal for some reason, even if priority is high. Alternatively, the BT device 101 may stop communicating operation halfway for a reason such as failure to receive a signal. Thus, by setting the Bluetooth enable signal BT_ENABLE to H level only for a period of time that is really necessary, the wireless LAN device 111 may perform any operation when this signal is not H level.

By a method of the above-described comparative example, when priority is given to the BT device 201, the wireless LAN device 202 may be unable to transmit or receive during a period of one BT slot. In contrast, as in the present embodiment, overall throughput can be improved by restricting operation of the wireless LAN device 111 only when the Bluetooth enable signal BT_ENABLE is H level.

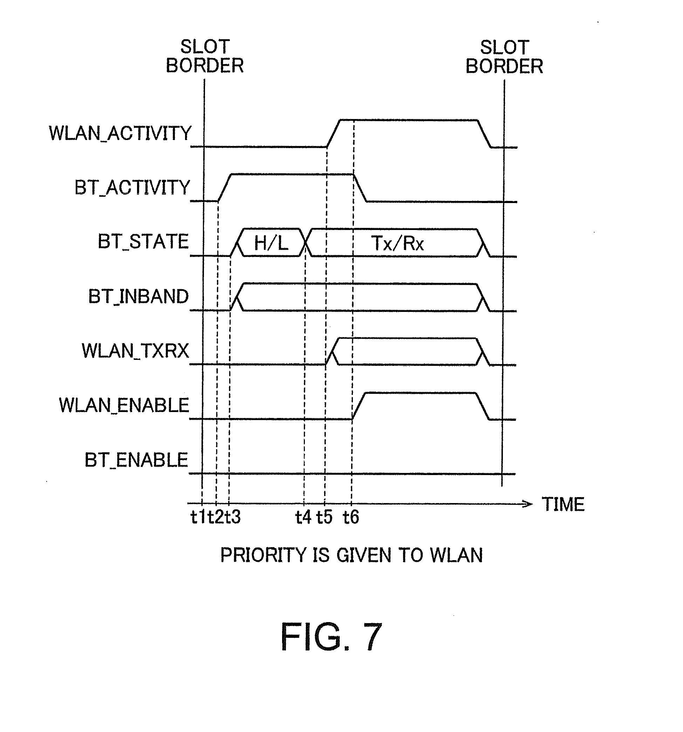

The following describes another more specific example of Fig. 5. Fig. 7 is a timing chart illustrating each of the signals when priority is given to the wireless LAN device 111. After the BT slot border (time t1), the Bluetooth activity signal BT_ACTIVITY is first set to H level (time t2).

Subsequently, the Bluetooth inband signal BT_INBAND and the Bluetooth state signal BT_STATE are changed (time t3 and t4) to give information from the BT device 101 to the wireless LAN device 111.

When the wireless LAN device 111 determines from those pieces of information that the wireless LAN device 111 has priority, the wireless LAN device 111 sets the wireless LAN activity signal WLAN_ACTIVITY to H level (time t5). At this time, the wireless LAN device 111 changes the wireless LAN transmission/reception identification signal WLAN_TXRX depending on the state of transmission or reception (time t5). The wireless LAN device 111 sets the wireless LAN enable signal WLAN_ENABLE to H level only when the wireless LAN device 111 is actually communicating.

The BT device 101 checks a level of the wireless LAN activity signal WLAN_ACTIVITY at time t6 counted from the BT slot border (time t1). When the wireless LAN activity signal WLAN_ACTIVITY turns out to be H level, the BT device 101 understands that the wireless LAN device 111 has priority, and keeps the Bluetooth enable signal BT_ENABLE fixed to L level.

The wireless LAN enable signal WLAN_ENABLE is set to H level only while the wireless LAN device 111 is actually receiving or transmitting a wireless signal. A period of time during which the wireless LAN device 111 actually receives or transmits a wireless signal is shorter than a period of time during which the wireless LAN activity signal WLAN_ACTIVITY is H level. In addition, the wireless LAN device 111 may not transmit or receive a wireless signal for some reason even if priority is high. Alternatively, the wireless LAN device 111 may stop communicating operation halfway for a reason such as failure to receive a signal. Thus, by setting the wireless LAN activity signal WLAN_ACTIVITY to H level only for a period of time that is really necessary, the BT device 101 may perform any operation when this signal is not H level. That is, even if the wireless LAN device 111 has priority, operation of the BT device 101 is restricted only when the wireless LAN enable signal WLAN_ENABLE is H level. During the period other than that, the BT device 101 is allowed to perform reception operation, for example. This will improve overall throughput.

The signals to be exchanged between the wireless LAN device 111 and the BT device 101 are determined now. Next, operation of a wireless device to which priority is decided not to be given as a result of these exchanges will be described. As described above, the wireless device to which priority is decided not to be given as a result of coexistence arbitration must make efforts to avoid disturbing communication of a wireless device to which priority is given during a period of time when the priority wireless device is actually communicating. That is, this period refers to a period of time during which the wireless LAN enable signal WLAN_ENABLE is H level in a case where the wireless LAN device 111 has priority. Alternatively, this period refers to a period of time during which the Bluetooth enable signal BT_ENABLE is H level in a case where the BT device 101 has priority.

There are two possible methods of avoiding disturbance of the other wireless device. A first method is to cause part or all of circuits of a non-priority wireless device to suspend, thereby stopping operation of the non-priority wireless device. As a result, the non-priority wireless device does not produce noise that serves as interference during transmission or reception by the priority wireless device.

Another method is to lower an amplification factor of circuits in the non-priority wireless device. This method does not suspend the circuits of the non-priority wireless device. This method however lowers the amplification factor of mainly a circuit that has an amplifying function that serves as a major cause of producing noise, thereby reducing interference by the noise from the non-priority wireless device to the priority wireless device. The latter method differs from the former method in that even the non-priority wireless device still has a chance to communicate.

That is, while the priority wireless device is in the transmission state or in the reception state, in each of the wireless devices that is in the transmission state other than the priority wireless device, the coexistence arbitrating circuit suspends operation of at least part of the transmitting circuit, or lowers the amplification factor of at least part of the transmitting circuit.

While the priority wireless device is in the transmission state, in each of the wireless devices that is in the reception state other than the priority wireless device, the coexistence arbitrating circuit suspends operation of at least part of the receiving circuit, or lowers the amplification factor of at least part of the receiving circuit.

While the priority wireless device is neither in the transmission state nor in the reception state, in each of the wireless devices other than the priority wireless device, the coexistence arbitrating circuit allows an operation of the circuit of which operation has been suspended, or raises the amplification factor of the circuit with the amplification factor being lowered.

The following describes these methods sequentially.

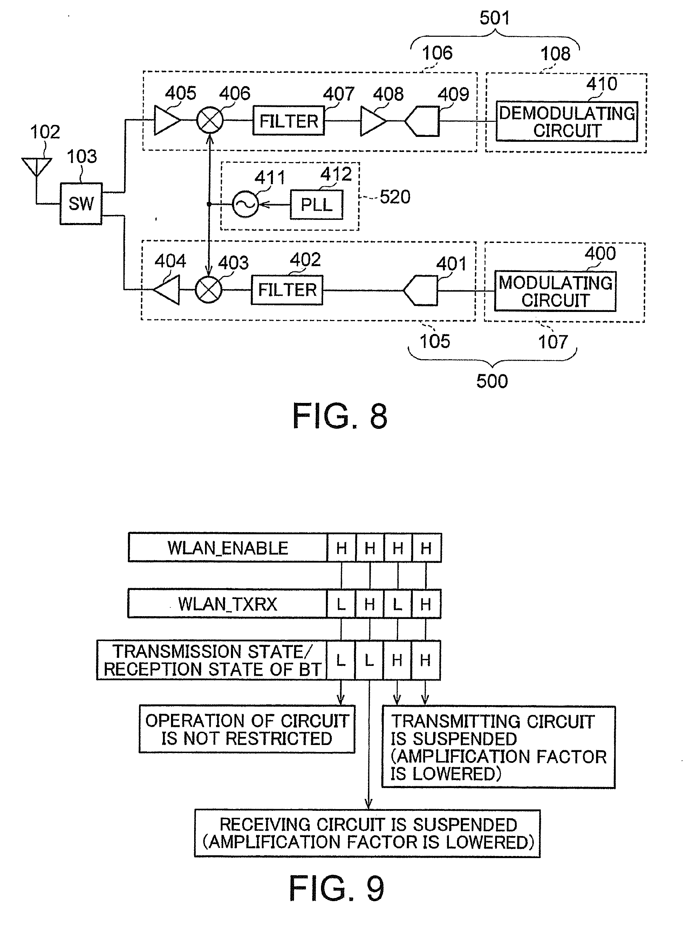

Fig. 8 is a block diagram illustrating the configuration related to wireless communication of the BT device 101 of Fig. 1 in more detail. The BT device 101 and the wireless LAN device 111 have similar configurations, thus the BT device 101 will be described here. Fig. 8 illustrates an example of the specific configuration of the transmitting circuit 500, the receiving circuit 501, and a local signal generating circuit 520 that is not illustrated in Fig. 1. The coexistence arbitrating circuit 104 and the like, which are identical to those of Fig. 1, are not illustrated.

Circuits of a transmitting system will be described. The transmitting circuit 500 includes a modulating circuit 400, a digital-to-analog (DA) converter 401, a transmitting filter 402, a transmitting mixer 403, and a power amplifier 404. Among these components, the modulating circuit 400 is included in the transmitting BB circuit 107, and components other than the modulating circuit 400 are included in the transmitting RF circuit 105.

The modulating circuit 400 produces a modulation signal that is a digital signal. The DA converter 401 converts the modulation signal into an analog signal. The transmitting filter 402 extracts a signal of a predetermined frequency band from the analog signal. The transmitting mixer 403 uses a local signal to increase a frequency of an output signal of the transmitting filter 402 into an RF signal. The power amplifier 404 amplifies an output signal of the transmitting mixer 403 to output a wireless signal. The power amplifier 404 transmits this wireless signal via the antenna switch 103 and the antenna 102.

Circuits of a receiving system will be described. The receiving circuit 501 includes a low-noise amplifier 405, a receiving mixer 406, a receiving filter 407, a high-gain amplifier 408, an analog-to-digital (AD) converter 409, and a demodulating circuit 410. Among these components, the demodulating circuit 410 is included in the receiving BB circuit 108, and components other than the demodulating circuit 410 are included in the receiving RF circuit 106.

The antenna switch 103 switches a wireless signal received by the antenna 102 to the receiving circuit 501 side. The low-noise amplifier 405 amplifies the wireless signal. The receiving mixer 406 uses the local signal to decrease a frequency of an output signal of the low-noise amplifier 405. The receiving filter 407 extracts a signal of a predetermined frequency band from an output signal of the receiving mixer 406 to remove noise. The high-gain amplifier 408 amplifies an output signal of the receiving filter 407. The AD converter 409 converts an output signal of the high-gain amplifier 408 into a digital signal. The demodulating circuit 410 demodulates the digital signal to extract a signal.

Circuits common to transmission and reception will be described. The local signal generating circuit 520 generates the local signal for transmission and reception of a wireless signal, and supplies the local signal to the transmitting circuit 500 and the receiving circuit 501. The local signal generating circuit 520 includes a voltage-controlled oscillator (VCO) 411 and a phase-locked loop (PLL) 412. The voltage-controlled oscillator 411 generates the local signal and supplies the local signal to the transmitting mixer 403 and the receiving mixer 406. The phase-locked loop 412 controls the voltage-controlled oscillator 411 to control a frequency of the local signal.

Fig. 9 is a diagram illustrating a method of controlling the circuits of Fig. 8 in the BT device 101. The coexistence arbitrating circuit 104 determines control of the circuits by a combination of the wireless LAN enable signal WLAN_ENABLE, the wireless LAN transmission/reception identification signal WLAN_TXRX, and a signal retained within the BT device 101, the signal indicating a BT transmission state/reception state.

Operation of the circuits of the BT device 101 is not restricted when the wireless LAN enable signal WLAN_ENABLE = L.

Operation of the circuits of the BT device 101 is not restricted when the wireless LAN enable signal WLAN_ENABLE = H (that is, the wireless LAN device 111 has priority), the wireless LAN transmission/reception identification signal WLAN_TXRX = L (that is, the wireless LAN device 111 is in the reception state), and the BT device 101 is in the reception state.

Operation of the receiving circuit 501 of the BT device 101 is suspended or the amplification factor of the receiving circuit 501 is lowered when the wireless LAN enable signal WLAN_ENABLE = H (that is, the wireless LAN device 111 has priority), the wireless LAN transmission/reception identification signal WLAN_TXRX = H (that is, the wireless LAN device 111 is in the transmission state), and the BT device 101 is in the reception state.

Operation of the transmitting circuit 500 of the BT device 101 is suspended or the amplification factor of the transmitting circuit 500 is lowered when the wireless LAN enable signal WLAN_ENABLE = H (that is, the wireless LAN device 111 has priority), the wireless LAN transmission/reception identification signal WLAN_TXRX = L (that is, the wireless LAN device 111 is in the reception state), and the BT device 101 is in the transmission state.

Operation of the transmitting circuit 500 of the BT device 101 is suspended or the amplification factor of the transmitting circuit 500 is lowered when the wireless LAN enable signal WLAN_ENABLE = H (that is, the wireless LAN device 111 has priority), the wireless LAN transmission/reception identification signal WLAN_TXRX = H (that is, the wireless LAN device 111 is in the transmission state), and the BT device 101 is in the transmission state.

When the circuits of the BT device 101 are controlled by a viewpoint of Fig. 9, the above-described cases of (1) to (3) will be considered.
(1) A case where priority is given to transmission by the wireless LAN device 111 and the BT device 101 is also set in the transmission state.
   In this case, the BT device 101 is controllable so that operation of the circuits of the BT device 101 does not adversely affect a transmission signal of the wireless LAN device 111 by suspending operation of the transmitting circuit 500 of the BT device 101 or by lowering the amplification factor of the transmitting circuit 500.
(2) A case where priority is given to transmission by the wireless LAN device 111 and the BT device 101 is set in the reception state.
   In this case, the BT device is controllable so that operation of the circuits of the BT device 101 does not adversely affect a transmission signal of the wireless LAN device 111 by suspending operation of the receiving circuit 501 of the BT device 101 or by lowering the amplification factor of the receiving circuit 501.
(3) A case where priority is given to reception by the wireless LAN device 111 and the BT device 101 is set in the transmission state.

In this case, the BT device 101 is controllable so that operation of the circuits of the BT device 101 does not adversely affect a transmission signal of the wireless LAN device 111 by suspending operation of the transmitting circuit 500 of the BT device 101 or by lowering the amplification factor of the transmitting circuit 500.

Thus, when priority is given to the wireless LAN device 111, it is possible to suppress interference of noise generated by the BT device 101 and to prevent communication performance of the wireless LAN device 111 from degrading by controlling the circuits of the BT device 101 by the method illustrated in Fig. 9.

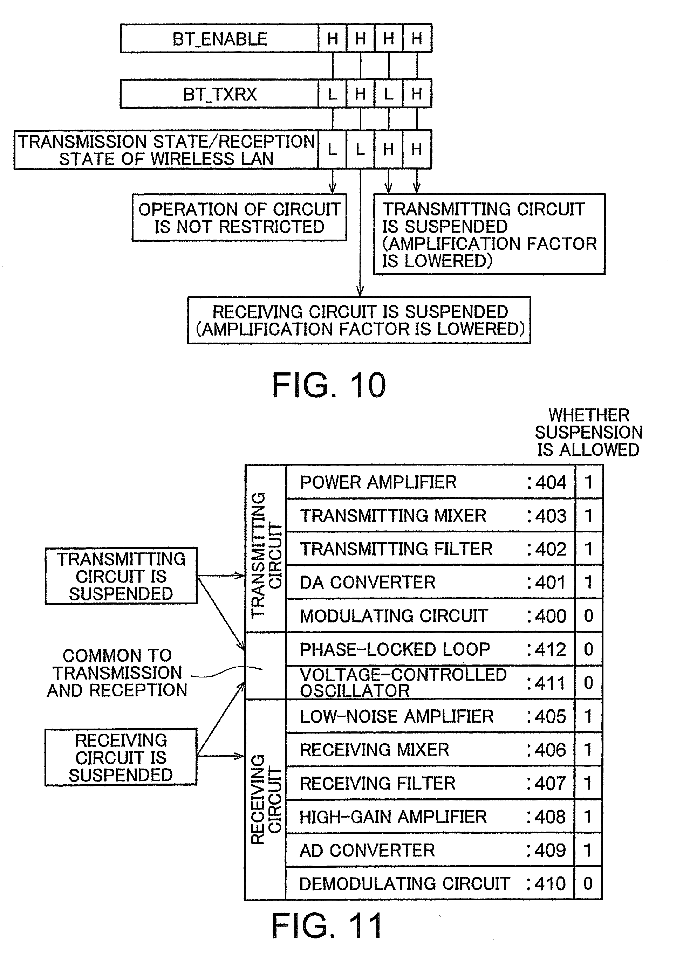

Fig. 10 is a diagram illustrating a method of controlling the circuits of Fig. 8 in the wireless LAN device 111. The coexistence arbitrating circuit 114 determines control of the circuits by a combination of the Bluetooth enable signal BT_ENABLE, the Bluetooth transmission/reception identification signal BT_TXRX included in the Bluetooth state signal BT_STATE, and a signal retained within the wireless LAN device 111, the signal indicating a wireless LAN transmission state/reception state.

Operation of the circuits of the wireless LAN device 111 is not restricted when the Bluetooth enable signal BT_ENABLE = L.

Operation of the circuits of the wireless LAN device 111 is not restricted when the Bluetooth enable signal BT_ENABLE = H (that is, the BT device 101 has priority), the Bluetooth transmission/reception identification signal BT_TXRX = L (that is, the BT device 101 is in the reception state), and the wireless LAN device 111 is in the reception state.

Operation of the receiving circuit 511 of the wireless LAN device 111 is suspended or the amplification factor of the receiving circuit 511 is lowered when the Bluetooth enable signal BT_ENABLE = H (that is, the BT device 101 has priority), the Bluetooth transmission/reception identification signal BT_TXRX = H (that is, the BT device 101 is in the transmission state), and the wireless LAN device 111 is in the reception state.

Operation of the transmitting circuit 510 of the wireless LAN device 111 is suspended or the amplification factor of the transmitting circuit 510 is lowered when the Bluetooth enable signal BT_ENABLE = H (that is, the BT device 101 has priority), the Bluetooth transmission/reception identification signal BT_TXRX = L (that is, the BT device 101 is in the reception state), and the wireless LAN device 111 is in the transmission state.

Operation of the transmitting circuit 510 of the wireless LAN device 111 is suspended or the amplification factor of the transmitting circuit 510 is lowered when the Bluetooth enable signal BT_ENABLE = H (that is, the BT device 101 has priority), the Bluetooth transmission/reception identification signal BT_TXRX = H (that is, the BT device 101 is in the transmission state), and the wireless LAN device 111 is in the transmission state.

When the circuits of the wireless LAN device 111 are controlled by a viewpoint of Fig. 10, the above-described cases of (4) to (6) will be considered.
(4) A case where priority is given to transmission by the BT device 101 and the wireless LAN device 111 is also set in the transmission state.
   In this case, the wireless LAN device 111 is controllable so that operation of the circuits of the wireless LAN device 111 does not adversely affect a transmission signal of the BT device 101 by suspending operation of the transmitting circuit 510 of the wireless LAN device 111 or by lowering the amplification factor of the transmitting circuit 510.
(5) A case where priority is given to transmission by the BT device 101 and the wireless LAN device 111 is set in the reception state.
   In this case, the wireless LAN device 111 is controllable so that operation of the circuits of the wireless LAN device 111 does not adversely affect a transmission signal of the BT device 101 by suspending operation of the receiving circuit 511 of the wireless LAN device 111 or by lowering the amplification factor of the receiving circuit 511.
(6) A case where priority is given to reception by the BT device 101 and the wireless LAN device 111 is set in the transmission state.

In this case, the wireless LAN device 111 is controllable so that operation of the circuits of the wireless LAN device 111 does not adversely affect a transmission signal of the BT device 101 by suspending operation of the transmitting circuit 510 of the wireless LAN device 111 or by lowering the amplification factor of the transmitting circuit 510.

Thus, when priority is given to the BT device 101, it is possible to suppress interference of noise generated by the wireless LAN device 111 and to prevent communication performance of the BT device 101 from degrading by controlling the circuits of the wireless LAN device 111 by the method illustrated in Fig. 10.

Fig. 11 is a diagram illustrating a method of individually controlling suspension of each of the circuits in a non-priority wireless device. Generally, it is possible to individually control each of the circuits illustrated in Fig. 8 to turn on or off. Accordingly, a register is provided in each of the circuits of Fig. 8. As illustrated in Fig. 11, "1" is previously written in a register of a circuit that can be turned off (suspended), and "0" is previously written in a register of a circuit that cannot be turned off.

When a transmitting circuit of a non-priority wireless device is suspended in accordance with processing of Fig. 9 and Fig. 10, a circuit in which "1" is written is turned off among the circuits of the transmitting circuit and the circuits common to transmission and reception of Fig. 11. When a receiving circuit is suspended, a circuit in which "1" is written is turned off among the circuits of the receiving circuit and the circuits common to transmission and reception of Fig. 11.

When it is determined whether a circuit is to be turned off, it is preferable not to turn off a circuit that needs time for returning from off to on. For example, it takes time to return a frequency once the phase-locked loop 412 and the voltage-controlled oscillator 411 are turned off. Thus, in the example of Fig. 11, "0" is written in the registers of these circuits. In a case where the modulating circuit 400 and the demodulating circuit 410 are configured so that parameters for the circuits are set when these circuits are turned on, it takes time to return. Therefore, as such an example, "0" is written in the registers of these circuits. This enables a circuit of which operation has been suspended to return quickly after the operation is allowed. Accordingly, the wireless device can quickly start wireless communication.

That is, in this example, while a priority wireless device is in the transmission state or in the reception state, in each of the wireless devices that is in the transmission state other than the priority wireless device, the coexistence arbitrating circuit suspends operation of the DA converter 401, transmitting filter 402, transmitting mixer 403, and power amplifier 404 of the transmitting circuit.

While a priority wireless device is in the transmission state, in each of the wireless devices that is in the reception state other than the priority wireless device, the coexistence arbitrating circuit suspends operation of the low-noise amplifier 405, receiving mixer 406, receiving filter 407, high-gain amplifier 408, and AD converter 409 of the receiving circuit.

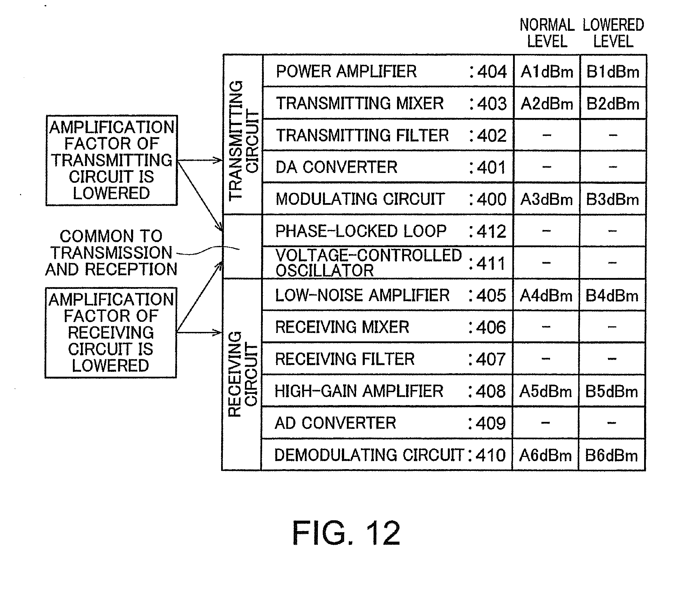

Fig. 12 is a diagram illustrating a method of lowering the amplification factor of each of the circuits in a non-priority wireless device. As illustrated in Fig. 12, a circuit having a function of amplifying a signal is selected, and for the selected circuit, target levels or settings for achieving the target levels are preset in a register, etc. As the target levels, a normal level and a level with a lowered amplification factor are prepared. When an instruction to lower the amplification factor is received, the target levels are switched between these two levels.

In an example of Fig. 12, it is assumed that the modulating circuit 400, the transmitting mixer 403, the power amplifier 404, the low-noise amplifier 405, the high-gain amplifier 408, and the demodulating circuit 410 have amplifying functions. The normal level and the level with a lowered amplification factor are set for each of these circuits.

When an instruction is received to lower the amplification factor of the transmitting circuit in accordance with a control method of Fig. 9 and Fig. 10, the amplification factors of applicable circuits in the transmitting circuit and the circuits common to transmission and reception are lowered. When an instruction is received to lower the amplification factor of the receiving circuit, the amplification factors of applicable circuits in the receiving circuit and the circuits common to transmission and reception are lowered.

That is, in this example, while a priority wireless device is in the transmission state or in the reception state, in each of the wireless devices that is in the transmission state other than the priority wireless device, the coexistence arbitrating circuit lowers the amplification factors of the modulating circuit 400, transmitting mixer 403, and power amplifier 404 of the transmitting circuit.

While a priority wireless device is in the transmission state, in each of the wireless devices that is in the reception state other than the priority wireless device, the coexistence arbitrating circuit lowers the amplification factors of the low-noise amplifier 405, high-gain amplifier 408, and demodulating circuit 410 of the receiving circuit.

In order to prevent interference via outside of the wireless communication apparatus 100, it is also possible to reduce interference of a circuit of a non-priority wireless device by controlling a direction of the antenna switches 103 and 113 or cutting the antenna switches 103 and 113 of the non-priority wireless device.

As described above, according to the present embodiment, while a priority wireless device is in the transmission state or in the reception state, in each of the wireless devices that is in the transmission state other than the priority wireless device, the coexistence arbitrating circuit suspends operation of at least part of the transmitting circuit, or lowers amplification factors of at least part of the transmitting circuit. This makes it possible to reduce a possibility that, while the priority wireless device transmits a wireless signal, the transmitted wireless signal is amplified by a transmitting circuit of a non-priority wireless device, and the amplified signal adversely affects transmitting operation of the priority wireless device. This also makes it possible to reduce a possibility that, while the priority wireless device receives a wireless signal, a transmission signal of the non-priority wireless device adversely affects reception operation of the priority wireless device.

While the priority wireless device is in the transmission state, in each of the wireless devices that is in the reception state other than the priority wireless device, the coexistence arbitrating circuit suspends operation of at least part of the receiving circuit, or lowers amplification factors of at least part of the receiving circuit. This makes it possible to reduce a possibility that, while the priority wireless device transmits a wireless signal, the transmitted wireless signal is amplified by the receiving circuit of the non-priority wireless device, and the amplified signal adversely affects transmitting operation of the priority wireless device.

Therefore, it is possible to improve communication performance of the priority wireless device after allowing the plurality of wireless devices to coexist.

The H level and L level of each of the signals exchanged between the coexistence arbitrating circuits 104 and 114 may be reversed.

Each of the circuit for suspending operation illustrated in Fig. 11 and the circuit for lowering the amplification factor illustrated in Fig. 12 is an example and is not limited to this example.

For example, when the wireless communication apparatus 100 includes three wireless devices, a coexistence arbitrating circuit of a third wireless device may be connected to the coexistence arbitrating circuit 104 with seven signal lines to exchange signals, and may be connected to the coexistence arbitrating circuit 114 with seven signal lines to exchange signals. For example, the coexistence arbitrating circuit of the third wireless device is supplied with the signal BT_ACTIVITY, the signal BT_STATE, the signal BT_INBAND, and the signal BT_ENABLE, from the coexistence arbitrating circuit 104. The coexistence arbitrating circuit of the third wireless device supplies, to the coexistence arbitrating circuit 104, a signal of a function corresponding to the signal WLAN_ACTIVITY, a signal of a function corresponding to the signal WLAN_TXRX, and a signal of a function corresponding to the signal WLAN_ENABLE. The coexistence arbitrating circuit of the third wireless device is supplied with, from the coexistence arbitrating circuit 114, the signal WLAN_ACTIVITY, the signal WLAN_TXRX, and the signal WLAN_ENABLE. The coexistence arbitrating circuit of the third wireless device supplies, to the coexistence arbitrating circuit 114, a signal of a function corresponding to the signal BT_ACTIVITY, a signal of a function corresponding to the signal BT_STATE, a signal of a function corresponding to the signal BT_INBAND, and a signal of a function corresponding to the signal BT_ENABLE.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A wireless communication apparatus comprising:
a plurality of wireless devices configured to perform wireless communication using an identical frequency band,
each of the wireless devices comprising:
a transmitting circuit configured to transmit a wireless signal;
a receiving circuit configured to receive the wireless signal; and
a coexistence arbitrating circuit,
wherein the coexistence arbitrating circuits of the wireless devices arbitrate each other to determine the wireless device to which wireless communication priority is given, and
while a priority wireless device is in a transmission state or in a reception state, in each of the wireless devices that is in the transmission state other than the priority wireless device, the coexistence arbitrating circuit suspends operation of at least part of the transmitting circuit, or lowers an amplification factor of at least part of the transmitting circuit.

2. The wireless communication apparatus of claim 1, wherein while the priority wireless device is in the transmission state, in each of the wireless devices that is in the reception state other than the priority wireless device, the coexistence arbitrating circuit suspends operation of at least part of the receiving circuit, or lowers an amplification factor of at least part of the receiving circuit.

3. The wireless communication apparatus of claim 1, wherein while the priority wireless device is neither in the transmission state nor in the reception state, in each of the wireless devices other than the priority wireless device, the coexistence arbitrating circuit allows an operation of the circuit of which operation has been suspended, or raises the amplification factor of the circuit with the amplification factor being lowered.

4. The wireless communication apparatus of claim 1, wherein while the priority wireless device is in the transmission state or in the reception state, in each of the wireless devices that is in the transmission state other than the priority wireless device, the coexistence arbitrating circuit does not suspend operation of circuits in the transmitting circuit that need time to return when operation is allowed after the operation is suspended.

5. The wireless communication apparatus of claim 2, wherein while the priority wireless device is in the transmission state, in each of the wireless devices that is in the reception state other than the priority wireless device, the coexistence arbitrating circuit does not suspend operation of circuits in the receiving circuit that need time to return when operation is allowed after the operation is suspended.

6. The wireless communication apparatus of claim 1, wherein
each of the transmitting circuit comprises
a modulating circuit configured to produce a modulation signal that is a digital signal,
a DA converter configured to convert the modulation signal into an analog signal,
a transmitting filter configured to extract a signal of a predetermined frequency band from the analog signal,
a transmitting mixer configured to increase a frequency of an output signal of the transmitting filter, and
a power amplifier configured to amplify an output signal of the transmitting mixer to output the wireless signal, and
while the priority wireless device is in the transmission state or in the reception state, in each of the wireless devices that is in the transmission state other than the priority wireless device, the coexistence arbitrating circuit suspends operation of the DA converter, the transmitting filter, the transmitting mixer, and the power amplifier of the transmitting circuit.

7. The wireless communication apparatus of claim 2, wherein
each of the receiving circuits comprises
a low-noise amplifier configured to amplify the wireless signal,
a receiving mixer configured to decrease a frequency of an output signal of the low-noise amplifier,
a receiving filter configured to extract a signal of a predetermined frequency band from an output signal of the receiving mixer,
a high-gain amplifier configured to amplify an output signal of the receiving filter,
an AD converter configured to convert an output signal of the high-gain amplifier into a digital signal, and
a demodulating circuit configured to demodulate the digital signal, and
while the priority wireless device is in the transmission state, in each of the wireless devices that is in the reception state other than the priority wireless device, the coexistence arbitrating circuit suspends operation of the low-noise amplifier, the receiving mixer, the receiving filter, the high-gain amplifier, and the AD converter of the receiving circuit.

8. The wireless communication apparatus of claim 1, wherein while the priority wireless device is in the transmission state or in the reception state, in each of the wireless devices that is in the transmission state other than the priority wireless device, the coexistence arbitrating circuit lowers the amplification factor of a circuit having a function of amplifying a signal in the transmitting circuit.

9. The wireless communication apparatus of claim 2, wherein while the priority wireless device is in the transmission state, in each of the wireless devices that is in the reception state other than the priority wireless device, the coexistence arbitrating circuit lowers the amplification factor of a circuit having a function of amplifying a signal in the receiving circuit.

10. The wireless communication apparatus of claim 1, wherein
each of the transmitting circuit comprises
a modulating circuit configured to produce a modulation signal that is a digital signal,
a DA converter configured to convert the modulation signal into an analog signal,
a transmitting filter configured to extract a signal of a predetermined frequency band from the analog signal,
a transmitting mixer configured to increase a frequency of an output signal of the transmitting filter, and
a power amplifier configured to amplify an output signal of the transmitting mixer to output the wireless signal, and
while the priority wireless device is in the transmission state or in the reception state, in each of the wireless devices that is in the transmission state other than the priority wireless device, the coexistence arbitrating circuit lowers the amplification factor of the modulating circuit, the transmitting mixer, and the power amplifier of the transmitting circuit.

11. The wireless communication apparatus of claim 2, wherein
each of the receiving circuits comprises
a low-noise amplifier configured to amplify the wireless signal,
a receiving mixer configured to decrease a frequency of an output signal of the low-noise amplifier,
a receiving filter configured to extract a signal of a predetermined frequency band from an output signal of the receiving mixer,
a high-gain amplifier configured to amplify an output signal of the receiving filter,
an AD converter configured to convert an output signal of the high-gain amplifier into a digital signal, and
a demodulating circuit configured to demodulate the digital signal, and
while the priority wireless device is in the transmission state, in each of the wireless devices that is in the reception state other than the priority wireless device, the coexistence arbitrating circuit lowers the amplification factor of the low-noise amplifier, the high-gain amplifier, and the demodulating circuit of the receiving circuit.

12. The wireless communication apparatus of claim 1, wherein
each of the wireless devices comprises
a voltage-controlled oscillator configured to generate a local signal and supply the local signal to the transmitting circuit and the receiving circuit, and
a phase-locked loop configured to control the voltage-controlled oscillator to control a frequency of the local signal,
while a priority wireless device is in the transmission state or in the reception state, in each of the wireless devices that is in the transmission state other than the priority wireless device, the coexistence arbitrating circuit does not suspend operation of the voltage-controlled oscillator and the phase-locked loop, and
while the priority wireless device is in the transmission state, in each of the wireless devices that is in the reception state other than the priority wireless device, the coexistence arbitrating circuit does not suspend operation of the voltage-controlled oscillator and the phase-locked loop.

13. The wireless communication apparatus of claim 1, wherein the wireless devices comprise a BT device compliant with a Bluetooth and a wireless LAN device compliant with a wireless LAN.

14. The wireless communication apparatus of claim 13, wherein
the coexistence arbitrating circuit of the BT device transmits, to the coexistence arbitrating circuit of the wireless LAN device, a Bluetooth activity signal indicating a communication request that the BT device wants to start communication,
the coexistence arbitrating circuit of the BT device transmits, to the coexistence arbitrating circuit of the wireless LAN device, a Bluetooth state signal comprising a signal representing a degree of priority of a signal that the BT device wants to communicate, and a signal indicating that this communication is either transmission or reception,
the coexistence arbitrating circuit of the BT device transmits, to the coexistence arbitrating circuit of the wireless LAN device, a Bluetooth inband signal indicating whether a frequency used by the BT device for communication overlaps a frequency used by the wireless LAN device,
the coexistence arbitrating circuit of the wireless LAN device transmits, to the coexistence arbitrating circuit of the BT device, a wireless LAN transmission/reception identification signal indicating whether the wireless LAN device is scheduled to perform transmission or reception,
the coexistence arbitrating circuit of the wireless LAN device transmits, to the coexistence arbitrating circuit of the BT device, a wireless LAN enable signal indicating that the wireless LAN device is in the transmission state or in the reception state, and
the coexistence arbitrating circuit of the BT device transmits, to the coexistence arbitrating circuit of the wireless LAN device, a Bluetooth enable signal indicating that the BT device is in the transmission state or in the reception state.

15. A wireless communication method used in a plurality of wireless devices configured to perform wireless communication using an identical frequency band, each of the wireless devices comprising a transmitting circuit configured to transmit a wireless signal and a receiving circuit configured to receive the wireless signal, the method comprising:
arbitrating each other to determine the wireless device to which wireless communication priority is given; and
while a priority wireless device is in a transmission state or in a reception state, in each of the wireless devices that is in the transmission state other than the priority wireless device, suspending operation of at least part of the transmitting circuit, or lowering an amplification factor of at least part of the transmitting circuit.
